# EUROPÄISCHE PATENTSCHRIFT

(11) **EP 2 733 277 B1**
(45) Veröffentlichungstag und Bekanntmachung des Hinweises auf die Patenterteilung: **07.02.2018**
(21) Anmeldenummer: 13192045.6
(22) Anmeldetag: 08.11.2013
(51) Int. Cl.: E04D 12/00, B32B 25/10, D04H 3/00

(54) **Dachunterspannbahn mit Gewebestreifengitter**
Roof lining membrane with fabric strip grid
Écran de sous-toiture avec grille de bandes de tissu

(30) Priorität: 20.11.2012 DE 102012111168
(43) Veröffentlichungstag der Anmeldung: 21.05.2014
(73) Patentinhaber: Monier Roofing Components GmbH, 61440 Oberursel (DE)
(72) Erfinder: Mawson, Christopher, 58706 Menden (DE)
(74) Vertreter: Grundmann, Dirk

(56) Entgegenhaltungen:
- EP-A2- 0 687 756
- WO-A2-2006/138053
- DE-A1- 10 008 431
- DE-U1- 9 207 367

## Beschreibung

Die Erfindung betrifft eine Dachunterspannbahn mit einer Vliesschicht und einem mit der Vliesschicht verbundenen Verstärkungsgitter.

Die DE 100 08 431 A1 beschreibt ein Flächengebilde aus zwei Vliesschichten, zwischen denen eine Trägerschicht aus einem Gewebe angeordnet ist. Das Gewebe besteht aus sich kreuzenden Bändchen, die in der Art von Schuss und Kette miteinander verwebt sind. Mittels eines Nadelverfahrens werden aus einem der Vliese Fäden durch die Trägerschicht hindurchgebracht. Dieses Durchnadeln führt zu einer mechanischen Verbindung der beiden Vliese. Mittels einer zwischen Trägerschicht und Vlies liegenden Klebeschicht werden die Fasern in ihren Lagen fixiert.

Die DE 92 07 367 U1 beschreibt einen Schichtstoff aus zwei Spinnvliesen, die mittels Nadelung miteinander verbunden sind. Eine Fixierung erfolgt über einen Schmelzbinder, der in Faserform in die Vliese eingebracht ist.

Die DE 44 37 521 A1 beschreibt eine Dachunterspannbahn mit einem Verstärkungsgitter.

Die EP 0 169 308 A2 beschreibt eine Dachunterspannbahn aus Kunststoff mit einer Vliesschicht, auf der ein Verstärkungsgitter aufliegt. Es ist eine PU-Folie vorgesehen, die mit der Vliesschicht verbunden ist, und die wasserdampfdurchlässig aber wasserundurchlässig ist.

Die DE 92 07 367 U1 beschreibt einen Schichtstoff aus zwei Vliesen, wobei zwischen den Vliesen ein Gelege aus Verstärkungsgarn einliegt. Die beiden Vlieslagen sind durch Vernadeln miteinander verbunden.
Die DE 298 11 128 U1 beschreibt eine von einem Wirrfaservlies gebildete Vliesschicht mit einem Verstärkungselement, das von einem Gewebebändchen gebildet sein kann.

Die DE 199 50 057 B4 beschreibt ein Glasfasergewebe, welches auf ein Polyestervlies genadelt ist. Bei dem Gewebe handelt es sich um ein Flächengewebe, welches unter der Verwendung von Acrylat und Styrolbinder mit dem Vlies verankert ist.

Die DE 100 08 431 A1 beschreibt ein Flächengebilde in Form einer Dachunterspannbahn. Ein Gewebe soll nach Art eines Flächengitters aus quer verlaufenden Bändchen bestehen, die miteinander verklebt sind. Mittels Nadeln wird das Gewebe mit einem Vlies verbunden. Auf der das Gewebe tragenden Seite des Vlieses befindet sich ein Deckvlies.
Die DE 195 43 991 A1 offenbart ein Armierungsgittergewebe zur Verwendung im Straßenbau. Ein Vlies soll durch Nadeln mit einer Gitterstruktur verbunden sein. Die EP 0 355 193 beschreibt ein Faservlies, welches mit einem Glasgittergewebe vernadelt ist. Das Faservlies soll Schmelzfasern aufweisen, die zur thermischen Fixierung verschmelzen können.

Die DE 10 2005 049 099 A1 beschreibt ein mehrschichtiges Flächengebilde, bei dem eine Textilverbundschicht mit einer Trägerschicht durch Wasservernadeln verbunden ist.
Die DE 10 2006 060 241 A1 beschreibt ebenfalls ein hydromechanisch verfestigtes Flächengebilde. Zusätzlich ist hier eine thermische Fixierung vorgesehen. Die US 5,334,446 beschreibt ein dreilagiges Flächengebilde. Zwischen zwei Vlieslagen ist ein Verstärkungsgitter eingebettet. Die Verbindung des Verstärkungsgitters mit den beiden Vlieslagen soll über hydromechanisches Vernadeln erfolgen.
Der Erfindung liegt die Aufgabe zugrunde, eine Dachunterspannbahn mit einem Verstärkungsgitter anzugeben, welches Gitterfreiräume aufweist, wobei das Verstärkungsgitter ohne die Verwendung von Klebstoff mit dem Vliesstoff verbunden ist. Diese Aufgabe wird gelöst durch eine Dachunterspannbahn nach Anspruch 1 und ein Herstellungsverfahren nach Anspruch 8. Erfindungsgemäß werden die Gitterstege jeweils von einem Streifen ausgebildet. Die Streifen sind mit der Vliesschicht vernadelt. Erfindungsgemäß bestehen die Streifen aus einem Gewebe. Das Gewebe besitzt Kettfäden und diese kreuzende Schussfäden. Es handelt sich bevorzugt um ein Drehgewebe, bei dem die Kettfäden von Fädenpaaren gebildet sind, die zwischen den einzelnen Schussfäden gedreht sind. Der Abstand der Streifen, der die Gitterfreiräume bestimmt, ist größer als die Breite eines Streifens. Erfindungsgemäß hat der Gitterfreiraum eine Breite, die einem Mehrfachen der Streifenbreite entspricht. Beim Vernadeln werden mittels geeignet ausgebildeten Nadeln Fasern oder Fäden der Vliesschicht in die Gewebezwischenräume der Gitterstreifen eingebracht. Dies kann von der Vliesseite her erfolgen. Die zur Verwendung kommenden mechanischen Nadeln besitzen dabei Vorsprünge, mit denen Abschnitte von Fäden oder Fasern der Vliesschicht aus dem Vlies herausgeschoben und in das Gewebe der Streifen eingeschoben werden. Die Vernadelung kann aber auch von der Gitterseite her erfolgen. Auch hier besitzen die Nadeln Haken, um Abschnitte von Fasern oder Fäden aus der Vliesschicht herauszuziehen. Diese Haken können von Einkerbungen ausgebildet werden. Nach dem erfindungsgemäßen Verfahren werden zum Vernadeln Nadelbalken verwendet, die über ihre gesamte Länge mit Nadeln, insbesondere Stahlnadeln bestückt sind, die beim Vernadeln auch in Abstandsfreiräume zwischen den Streifen in das Vliesmaterial hineinstechen. Die in die Gitterstege eingebrachten Abschnitte der Fasern oder Fäden werden anschließend angeschmolzen. Hierzu besitzt zumindest ein Anteil der Fasern des Vliesmaterials einen bei niedrigen Temperaturen schmelzenden Mantel. Es handelt sich um ein Mischfaservlies. Mindestens 5 Prozent, bevorzugt 15 Prozent des Mischfaservlieses können von Kernmantelfasern gebildet sein, deren Mantel aufschmelzbar ist. Die Kernmantelfasern, die im Vlies verarbeitet sind, haben einen Kern, der einen hohen Schmelzpunkt besitzt und der von einem Mantel umgeben ist, dessen Schmelzpunkt geringer ist als das Material des Kerns. Auch wenn der Mantel aufschmilzt behält, der Kern seine Faserstruktur. Dabei können sich verschiedene Fasern miteinander verbinden. Es findet innerhalb des Steggewebes eine Verklumpung bzw. Verschmelzung statt.

Die Fasern können sich aber auch mit den Fäden der Gewebestege schmelzverbinden. Auf das Flächengebilde wird eine dampfdiffusionsoffene Beschichtung aus Kunststoff aufgebracht. Es kann sich dabei um eine aufextrudierte PU-Folie handeln. Die Gewebestege werden sich kreuzend und mit Abstand zueinander auf das Vliessubstrat aufgebracht und in einem ersten Verfahrensschritt mechanisch durch Vernadeln mit der Vliesschicht verbunden. In einem darauf folgenden Temperaturschritt werden die in die Gewebestege eingebrachten Abschnitte der Vliesfasern teilweise angeschmolzen, so dass es zu einer innigen Verbindung zwischen den Stegen des Gitters und dem Vliessubstrat kommt. Dies kann beispielsweise mit einem Kalander erfolgen. Der Kalander kann beheizte Kalanderwalzen aufweisen. Durch den Spalt zwischen den Walzen wird das Flächengebilde hindurchgefördert. Sowohl die Temperaturbeaufschlagung als auch das Nadeln erfolgt großflächig, also nicht nur im Bereich in dem die von Streifen gebildeten Stege verlaufen, sondern auch in dem Bereich, der zwischen den Stegen liegt. Das erfindungsgemäße Flächengebilde eignet sich besonders für die Verwendung als Dachunterspannbahn. Es kann dabei gitterseitig auf eine Holzunterkonstruktion aufgebracht werden. Das Gitter besitzt große Stabilität, wenn es als Gewebe ausgebildet ist. Es bietet eine hohe Abriebsbeständigkeit. Das Gitter ist innig mit dem Vliessubstrat verbunden. Die Verbindung besteht aus einer mechanischen Verkrallung der in das Gewebe des Gitters eingebrachten Fasern des Vlieses. Die Streifen können eine Gitterstruktur aufweisen. Die Streifen können aus einem textilen Flächengebilde bestehen. Das textile Flächengebilde kann ein Gelege oder ein Bändchengewebe sein. Es kann auch ein normales Gewebe, vorzugsweise mit einer Leinwand-, Körper- oder Atlasbindung sein.

In einer Variante der Erfindung kann die diffusionsoffene Beschichtung auch gitterseitig aufgebracht sein.

Ausführungsbeispiele der Erfindung werden nachfolgend anhand beigefügter Zeichnungen erläutert. Es zeigen:
- Fig. 1: perspektivisch und schematisch einen Ausschnitt aus einem erfindungsgemäßen Flächengebilde in Form eines Vliessubstrates 1, auf dem sich kreuzende streifenförmige Gitterstege aufgelegt sind, die formschlüssig mit der Vliesschicht 1 verbunden sind;
- Fig. 2: einen Schnitt gemäß der Linie II - II in Figur 1, jedoch vor der formschlüssigen Verbindung von Gittersteg 3 mit Vliesschicht 1;
- Fig. 3: eine Darstellung gemäß Figur 2, jedoch beim Vernadeln;
- Fig. 4: eine Darstellung gemäß Figur 3, wobei die in die Vliesschicht 1 eingedrungenen Nadeln aus der gegenüberliegenden Vliesseite ausgetreten sind;
- Fig. 5: eine Folgedarstellung zu Figur 4, wobei die Nadeln wieder zurückgezogen werden;
- Fig. 6: eine Folgedarstellung nach einer thermischen Behandlung;
- Fig. 7: ein alternatives Fertigungsverfahren, bei dem die Nadeln von der Stegseite in die Vliesschicht eingebracht werden;
- Fig. 8: eine Folgedarstellung, wobei die Nadeln aus der Vliesschicht wieder herausgezogen sind;
- Fig. 9: eine Folgedarstellung nach einer thermischen Behandlung und nach Aufextrudieren einer PU-Schicht;
- Fig. 10: einen Schnitt durch eine Kernmantelfaser und
- Fig. 11: eine Darstellung gemäß Figur 9, wobei die PU-Schicht gitterseitig aufgebracht ist.

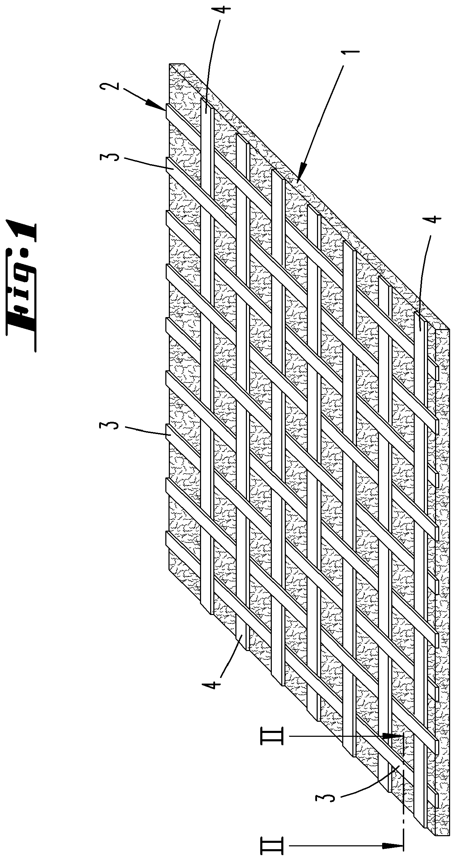

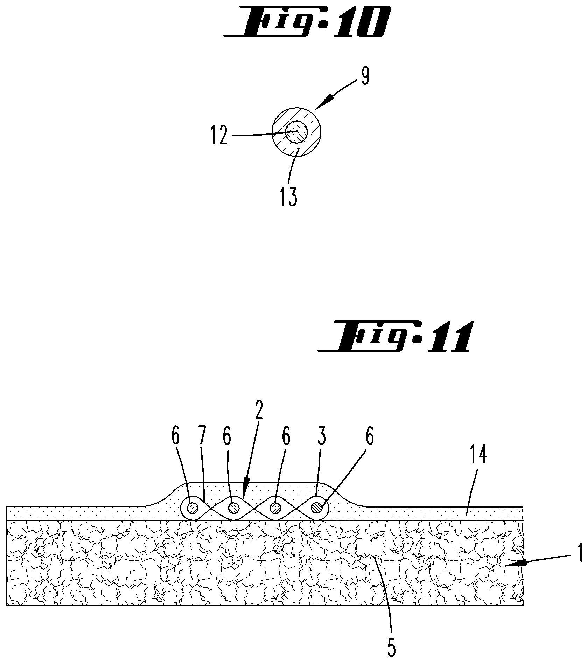

Die Figur 1 verdeutlicht den Aufbau eines erfindungsgemäßen Flächengebildes, welches nach einer Beschichtung mit einer wasserdampfdurchlässigen aber wasserundurchlässigen Schicht als Dachunterspannbahn verwendet werden kann. Das Substrat ist ein Vlies 1, bei dem es sich um ein Wirrgelege handeln kann. Das Vlies besteht aus einem Kunststoffmaterial. Es besteht aus dünnen Fasern. Mindestens fünf Prozent, bevorzugt fünfzehn Prozent der Fasern können aus einem Kernmantelmaterial bestehen, wie es in der Figur 10 dargestellt ist. Der Kernbereich 12 der Faser 9 besteht aus einem ersten Kunststoffmaterial. Der Mantelbereich des Fadens 9 besteht aus einem zweiten Kunststoffmaterial. Das zweite Kunststoffmaterial hat einen geringeren Schmelzpunkt als das erste Kunststoffmaterial. Dies hat zur Folge, dass bei einer Wärmebehandlung eines derart ausgebildeten Mischvlieses bei Abschnitten der Faser 9 Bereiche des Mantels 13 anschmelzen können. Der Kern 12 schmilzt aber nicht. Dies hat zur Folge, dass die Faserstruktur erhalten bleibt, jedoch Oberflächenabschnitte aneinander angrenzender, sich insbesondere berührender Fasern miteinander verschmelzen können. Auf dem Vlies 1 befindet sich ein Verstärkungsgitter 2. Das Verstärkungsgitter 2 besteht aus sich kreuzenden Gitterstegen 3, 4. Die Gitterstege 3, 4 sind miteinander verwoben. Die kreuzweise parallel zueinander verlaufenden Gitterstege 3, 4 besitzen jeweils einen Abstand zu einem parallel verlaufenden Gittersteg 3, 4.

Die Stege 3, 4 des Gitters 2 haben die Form von Streifen. Sie besitzen eine laterale Breite, die um ein Mehrfaches größer ist als die Höhe. In einer bevorzugten Ausgestaltung werden die Gitterstege 3, 4 von einem Gewebe ausgebildet, bei dem die Kettfäden 6 in Erstreckungsrichtung der Stege 3, 4 verlaufen. In den Zeichnungen sind der Übersicht halber nur wenige Kettfäden dargestellt. In nicht dargestellten Ausführungsbeispielen besitzen die streifenartig ausgebildeten Gitterstege 3, 4 aber eine wesentlich höhere Anzahl von Kettfäden 6.

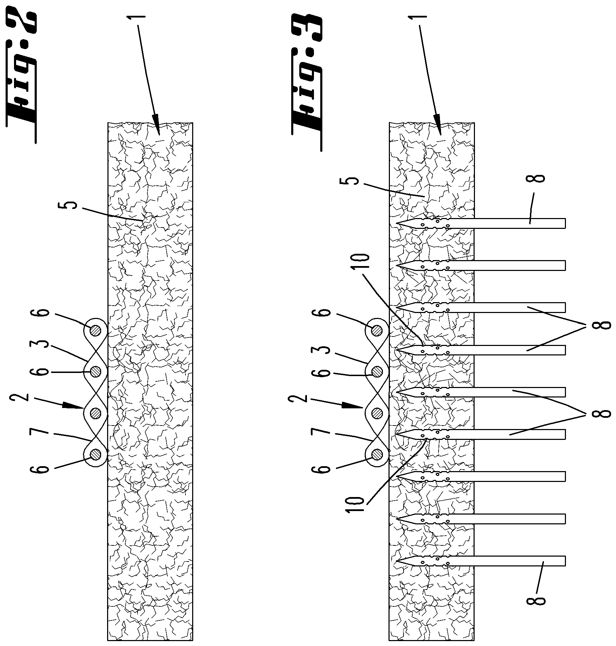

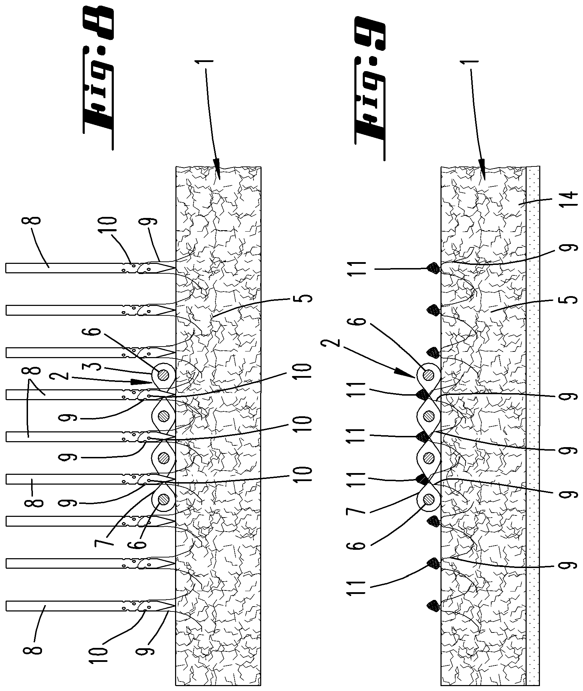

Die Kettfäden 6 sind miteinander durch Schussfäden 7 verbunden. Die Gitterstegstreifen 3, 4 werden von Drehgeweben ausgebildet, bei denen jeweils ein Kettfaden von mindestens zwei Fäden ausgebildet ist, die zwischen zwei Schussfäden 7 verdreht sind. Die Figuren 2 bis 9 zeigen das Gewebe und das Vlies lediglich schematisch im Querschnitt.

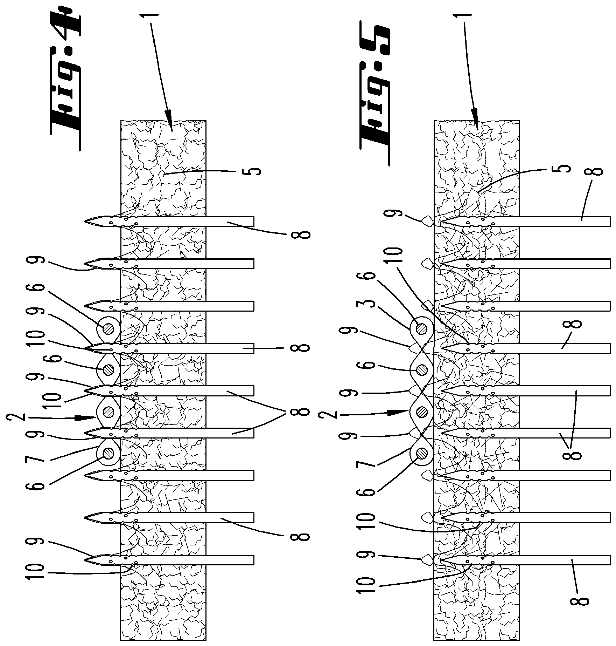

Um eine formschlüssige Verbindung zwischen den Stegen 3, 4 und dem Vlies 1 herzustellen, wird der gesamte Vliesstreifen mit darauf aufliegendem Verstärkungsgitter 2 genadelt. Hierzu können Nadelbalken verwendet werden, deren Nadeln 8 spitzenseitig Haken 10 aufweisen. Die Haken können von Einkerbungen in den Schäften der Nadeln ausgebildet sein. Bei dem in den Figuren 2 bis 6 dargestellten Ausführungsbeispiel erfolgt die Vernadelung von der dem Gitter 2 abgewandten Seite des Vlieses 1 her. Die Spitzen der Nadeln 8 besitzen auch hier Hakenkerben 10, die Abschnitte einer Vliesfaser 9 aus dem Fasermaterial 5 des Vlieses 1 herausschieben. Die Vernadelung erfolgt über die gesamte Breite des Vlieses, also nicht nur dort, wo sich die Gitterstege 3, 4 befinden, sondern auch in den Gitterstegzwischenräumen. Die von den Haken aus dem Fasermaterial 5 des Vliesstoffes 1 herausgeschobenen Faserabschnitte 9 durchdringen dabei das Gewebe des Streifens 3. Werden die Nadeln wieder zurückgezogen, so verbleiben die aus dem Fasermaterial 5 herausgeschobenen Faserabschnitte 9 im Bereich zwischen Kettfaden 6 und Schussfaden 7 des Gewebesteges 3 (in der Figur 5 sind schematisch schlaufenartige Strukturen dargestellt, die die aus dem Vliesstoff herausgedrängten Faserabschnitte symbolisieren).

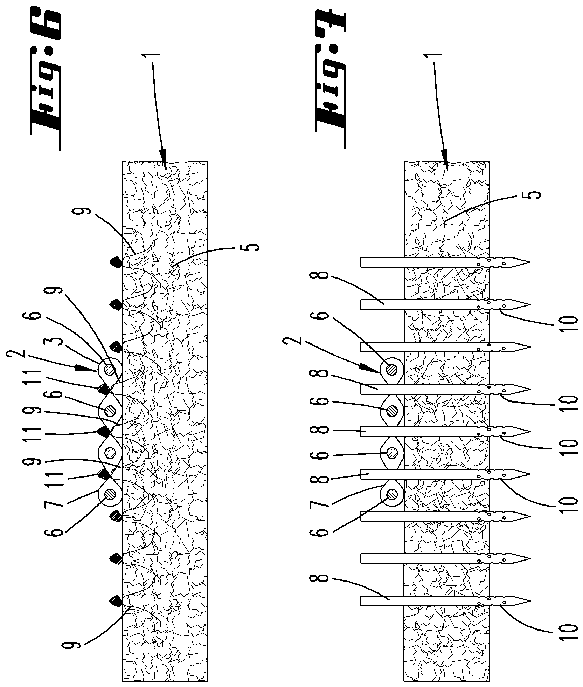

Mittels thermischer Beaufschlagung wird die das Gitter 2 tragende Seite der Vliesschicht 1 thermisch behandelt. Dies kann beispielsweise in einem Kalander oder in einer anderen geeigneten Vorrichtung erfolgen. Bei dieser thermischen Behandlung schmelzen die Mantelabschnitte 13 der Kernmantelfasern 9 an und verbinden sich mit den Kettfäden 6 bzw. den Schussfäden 7. Die aus dem Vlies herausgedrängten Faserabschnitte 9 können sich bei der thermischen Behandlung nicht nur miteinander stoffschlüssig verbinden. Es ist auch möglich, dass es zu einer Verklumpung kommt. (In der Figur 6 ist diese stoffschlüssige Verbindung der Vliesfaserabschnitte 9 untereinander bzw. der Vliesfaserabschnitte 9 mit den Kettfäden 6 bzw. Schussfäden 7 durch schwarze Flächen symbolisiert).

In einem letzten Verfahrensschritt wird auf die dem Gitter 2 abgewandte Seite des Vlieses 1 bevorzugt eine Polyurethanfolie 14 aufgebracht. Es kann sich aber auch um eine Folie aus einem Acrylat oder um eine PET-Beschichtung handeln. Die Beschichtung muss nicht notwendigerweise aufextrudiert werden. Es ist auch möglich, insbesondere ein Acrylat oder ein Polyurethan in Form einer Dispersion aufzubringen, wobei das Auftragen mittels zum Beispiel Foulardieren, Sprühen, Streichen etc. erfolgen kann. Ferner besteht auch die Möglichkeit, eine bestehende Folie auf den Vliesstoff aufzukleben. Dies erfolgt mittels eines Klebstoffsystems oder durch die Verwendung einer monolithischen thermoplastischen Klebstofffolie, die die Eigenschaft der Diffusionsoffenheit aber Wasserdampfdurchlässigkeit aufweist. Die Beschichtung bildet eine Funktionsschicht. Diese kann nicht nur aus einer monolithischen Folie, sondern auch aus einer Schaumbeschichtung bestehen. Die bevorzugt aufextrudierte Polyurethanfolie 14 ist wasserdampfdurchlässig aber wasserdicht. Eine derartige diffusionsoffene Folie kann aber auch auf die das Gitter 2 tragende Seite der Vliesschicht 1 aufgebracht werden, wie es die Figur 11 zeigt.

Die Figuren 7 bis 8 zeigen eine Verfahrensvariante, bei der die Vernadelung von der das Gitter 2 tragenden Seite der Vliesschicht 1 erfolgt. Bei diesem Verfahren werden Nadeln 8 verwendet, die Hakeneinkerbungen 10 aufweisen, die identisch ausgebildet sind. Sie haben hier eine Widerhakenfunktion, so dass sie beim Herausziehen aus der Vliesschicht 1 Fasern aus der Oberfläche mitnehmen. Bereichsweise werden somit Faserabschnitte 9 in das Steggewebe 3 hineingezogen. Auch hier verbleiben nach dem vollständigen Herausziehen der Nadeln aus dem Vlies 1 Schlaufen oder Fasern im Gittersteg 3, die in einem anschließenden thermischen Behandlungsschritt angeschmolzen werden, um sich mit den Kettfäden 6 oder den Schussfäden 7 zu verbinden bzw. um miteinander zu verschmelzen, so dass sich Verklumpungen 11 ausbilden. (Auch hier sind die angeschmolzenen Faserabschnitte 9 durch schwarze Flächen symbolisiert dargestellt).

Auch dieses mit einem Armierungsgitter 2 versehene Vlies 1 wird anschließend mit einer Diffusionsfolie 14 versehen.

Die Zeichnungen sind keine maßstabsgerechten Wiedergaben einer Dachunterspannbahn. Sie dienen lediglich zur Erläuterung des strukturellen Aufbaus und des Herstellungsverfahrens. Die in der Figur 1 gezeigten, sich kreuzenden Gitterstege 3, 4 bestehen jeweils aus Gewebestreifen. Jeder Gewebestreifen 3, 4 besitzt eine Vielzahl parallel zueinander verlaufender, in der Figur 1 nicht dargestellter Kettfäden 6, die in Erstreckungsrichtung des jeweiligen Streifens 3, 4 verlaufen. Die Kettfäden 6 sind mittels Schussfäden 7 zu Bändern verwebt. Jeder Gittersteg 3, 4 wird somit von einem Textilband ausgebildet. Das Verstärkungsgitter insgesamt besteht somit aus parallel zueinander verlaufenden ersten textilen Bändern 3, die von einer Vielzahl ebenfalls parallel zueinander verlaufender textiler Bänder 4 gekreuzt werden. Zwei parallel zueinander verlaufende textile Bänder 3, 4 sind um mindestens die Breite jedes einzelnen textilen Bandes 3, 4 voneinander beabstandet. Im Ausführungsbeispiel sind unmittelbar einander benachbarte textile Bänder 3, 4 um mehr als das Doppelte der Breite des jeweiligen textilen Bandes 3, 4 voneinander beabstandet, so dass die Summe der von den Bändern 3, 4 abgedeckten Flächenabschnitte der Vliesschicht 1 um ein Mehrfaches kleiner ist als die Summe der rechteckigen Zwischenräume zwischen den sich kreuzenden textilen Bändern 3, 4.

### Bezugszeichenliste

- 1: Vliesschicht
- 2: Verstärkungsgitter
- 3: Gittersteg
- 4: Gittersteg
- 5: Faser
- 6: Kettfaden
- 7: Schussfaden
- 8: Nadel
- 9: Vliesfaser
- 10: Hakenkerben
- 11: Verschmelzung
- 12: Kern
- 13: Mantel
- 14: PU-Folie

## Patentansprüche

1. Dachunterspannbahn mit einer Vliesschicht (1) und einem mit der Vliesschicht (1) verbundenen Verstärkungsgitter (2), das kreuzweise parallel zueinander verlaufende Gitterstege (3, 4) besitzt, wobei die Gitterstege (3, 4) des Verstärkungsgitters (2) von Streifen gebildet sind, wobei die Dachunterspannbahn eine Vernadelung aufweist, mit der die Streifen unter Ausbildung einer Kontaktfläche zur Vliesschicht (1) mit der Vliesschicht (1) vernadelt sind, **dadurch gekennzeichnet, dass** beim Vernadeln Abschnitte von Fasern/Fäden der Vliesschicht (1) von Nadeln in die Streifen (3, 4) gebracht sind und unter Beibehaltung der Faserstruktur der Fasern/Fäden angeschmolzen sind, dass die Streifen des Verstärkungsgitters (2) aus einem Gewebe mit Kettfäden und diese kreuzenden Schussfäden bestehen, wobei zwischen den Streifen Gitterfreiräume verbleiben, deren Breite größer ist als das Mehrfache einer Streifenbreite, und dass die Dachunterspannbahn über ihre gesamte Breite die Vernadelung aufweist.

2. Dachunterspannbahn nach Anspruch 1, **dadurch gekennzeichnet, dass** die Gitterstege (3, 4) des Verstärkungsgitters aus einem Drehgewebe bestehen.

3. Dachunterspannbahn nach einem der vorhergehenden Ansprüche, **dadurch gekennzeichnet, dass** die Vliesschicht (1) Fäden/Fasern (9) aufweist, die einen Kern (12) aufweisen, der von einer Ummantelung (13) umgeben ist, die aus einem Kunststoff besteht, der bei einer niedrigeren Temperatur schmilzt als der Kunststoff des Kerns (12).

4. Dachunterspannbahn nach Anspruch 3, **dadurch gekennzeichnet, dass** mindestens fünf Prozent, bevorzugt fünfzehn Prozent der Fasern der Vliesschicht (5) aus eine Ummantelung (13) aufweisenden Fäden/Fasern (9) besteht.

5. Dachunterspannbahn nach einem der vorhergehenden Ansprüche, **gekennzeichnet durch** eine wasserundurchlässige aber wasserdampfdurchlässige Beschichtung (14).

6. Dachunterspannbahn nach Anspruch 5, **dadurch gekennzeichnet, dass** die Beschichtung (14) eine Polyurethan-Beschichtung ist.

7. Dachunterspannbahn nach einem der Ansprüche 5 oder 6, **dadurch gekennzeichnet, dass** die Beschichtung (14) auf der vom Verstärkungsgitter (2) wegweisenden Seite der Vliesschicht (1) aufgebracht ist.

8. Verfahren zum Herstellen einer Dachunterspannbahn gemäß einem oder mehreren der vorhergehenden Ansprüche, bei dem auf eine von einem Vlies gebildeten Vliesschicht (1) sich kreuzende, parallel zueinander verlaufende Streifen (3, 4) aufgelegt werden, wobei zwischen den Streifen Gitterfreiräume verbleiben, deren Breite größer ist als das Mehrfache einer Streifenbreite, wobei die Streifen aus einem Gewebe mit Kettfäden und diese kreuzenden Schussfäden bestehen, wobei mit Hilfe von Nadeln (8) über die gesamte Breite des Vlieses eine Vernadelung erfolgt, bei der Abschnitte von Fäden/Fasern (9) der Vliesschicht (1) in die Streifen (3, 4) gebracht werden, wobei Nadelbalken verwendet werden, die über ihre gesamte Länge mit Nadeln bestückt sind, sodass die Nadeln auch in den Gitterfreiräumen in die Vliesschicht hineinstechen, wobei das so erzeugte Flächengebilde zumindest von der das Verstärkungsgitter (2) tragenden Vliesseite her großflächig im Bereich der Gitterstege (3, 4) und den Gitterfreiräumen derart temperaturbehandelt wird, dass die Oberflächen der in die Gewebezwischenräume der Gitterstege (3, 4) eingebrachten Abschnitte der Fäden/Fasern (9) der Vliesschicht anschmelzen.

9. Verfahren nach Anspruch 8, **dadurch gekennzeichnet, dass** die Vernadelung von der Vliesseite her erfolgt, wobei die Nadeln (8) Abschnitte von Fäden/Fasern (9) der Vliesschicht (1) in das Gewebe der Streifen (3, 4) schieben.

10. Verfahren nach einem der Ansprüche 8 oder 9, **dadurch gekennzeichnet, dass** die Vliesschicht (1) Fäden/Fasern (9) aufweist, die eine Ummantelung (13) aufweist, die bei einer niedrigeren Temperatur schmilzt als der von der Ummantelung (13) umgebene Kern (12).

11. Verfahren nach einem der Ansprüche 8 bis 10, **dadurch gekennzeichnet, dass** insbesondere auf die dem Gitter (2) gegenüberliegende Vliesschichtseite eine monolithisch dampfdiffusionsoffene Beschichtung (14) aufgebracht wird.

12. Verfahren nach einem der Ansprüche 8 bis 11, **dadurch gekennzeichnet, dass** zur Temperaturbehandlung Kalanderwalzen verwendet werden, zwischen denen die Dachunterspannbahn hindurchläuft.

## Claims

1. Roofing underlay comprising a non-woven fabric layer (1) and a reinforcing mesh (2) that is connected to the non-woven fabric layer (1) and has mesh ribs (3, 4) that extend obliquely and in parallel with one another, the mesh ribs (3, 4) of the reinforcing mesh (2) being formed by strips, the roofing underlay comprising needling by means of which the strips are needle-punched into the non-woven fabric layer (1) to form a contact surface with the non-woven fabric layer (1),
**characterised**
**in that** portions of fibres/threads of the non-woven fabric layer (1) are introduced into the strips (3, 4) by needles during needling and are melted on while maintaining the fibre structure of the fibres/threads,
**in that** the strips of the reinforcing mesh (2) consist of a woven fabric comprising warp threads and weft threads intersecting said warp threads, mesh clearances remaining between the strips, the width of which clearances is several times greater than the width of a strip, and
**in that** the roofing underlay comprises the needling over its entire width.

2. Roofing underlay according to claim 1, **characterised in that** the mesh ribs (3, 4) of the reinforcing mesh consist of a leno cloth.

3. Roofing underlay according to either of the preceding claims, **characterised in that** the non-woven fabric layer (1) comprises threads/fibres (9) which comprise a core (12) surrounded by a sheath (13), said sheath consisting of a plastics material that melts at a lower temperature than the plastics material of the core (12).

4. Roofing underlay according to claim 3, **characterised in that** at least five percent, preferably fifteen percent of the fibres of the non-woven fabric layer (5) consist of threads/fibres (9) comprising a sheath (13).

5. Roofing underlay according to any of the preceding claims, **characterised by** a coating (14) which is impermeable to water but permeable to water vapour.

6. Roofing underlay according to claim 5, **characterised in that** the coating (14) is a polyurethane coating.

7. Roofing underlay according to either claim 5 or claim 6, **characterised in that** the coating (14) is applied to the side of the non-woven fabric layer (1) facing away from the reinforcing mesh (2).

8. Method for producing a roofing underlay according to one or more of the preceding claims, in which intersecting mutually parallel strips (3, 4) are laid onto a non-woven fabric layer (1) which is formed from a non-woven fabric, wherein mesh clearances remain between the strips, the width of which clearances is several times greater than the width of a strip, wherein the strips consist of a woven fabric comprising warp threads and weft threads intersecting said warp threads, wherein needling is carried out by means of needles (8) across the entire width of the non-woven fabric, during which needling portions of fibres/threads (9) of the non-woven fabric layer (1) are introduced into the strips (3, 4), wherein needle bars are used, which bars are equipped with needles across the entire length thereof, with the result that the needles also pierce the non-woven fabric layer in the mesh clearances, wherein the fabric thus produced is heat-treated, at least from the side of the non-woven fabric bearing the reinforcing mesh (2), over a large surface area in the region of the mesh ribs (3, 4) and of the mesh clearances in such a way that the surfaces of the portions of threads/fibres (9) introduced into the woven fabric gaps of the mesh ribs (3, 4) melt onto the non-woven fabric layer.

9. Method according to claim 8, **characterised in that** the needling is carried out from the side of the non-woven fabric, the needles (8) pushing portions of threads/fibres (9) from the non-woven fabric layer (1) into the woven fabric of the strips (3, 4).

10. Method according to either claim 8 or claim 9, **characterised in that** the non-woven fabric layer (1) comprises threads/fibres (9) which comprise a sheath (13) which melts at a lower temperature than the core (12) surrounded by the sheath (13).

11. Method according to any of claims 8 to 10, **characterised in that** a coating (14) which is monolithically permeable to diffusion of vapour is applied in particular to the side of the non-woven fabric layer opposite the mesh (2).

12. Method according to any of claims 8 to 11, **characterised in that** calender rollers are used for heat-treatment, between which rollers the roofing underlay passes.

## Revendications

1. Bande de sous-toiture, comprenant une couche de non-tissé (1) et un treillis de renfort (2) lié avec la couche de non-tissé (1) lequel treillis de renfort (2) comprend des barres de treillis (3, 4) s'étendant parallèlement entre elles et se croisant, dans lequel les barres de treillis (3, 4) du treillis de renfort (2) sont formées par des rubans, dans lequel la bande de sous-toiture comprend un aiguilletage avec lequel les rubans sont aiguilletés avec la couche de non-tissé (1) sous formation d'une surface de contact avec la couche de non-tissé (1), **caractérisé en ce que** des parties de fibres/fils de la couche de non-tissé (1) sont introduites lors de l'aiguilletage dans les rubans par des aiguilles et sont fondues en maintenant la structure fibreuse des fibres/fils, **en ce que** les rubans du treillis de renfort (2) sont faits d'un tissu avec fils de chaîne et fils de trames croisant ceux-ci, dans lequel subsistent entre les rubans des espaces libres de treillis dont la largeur est supérieure au multiple d'une largeur de bande et **en ce que** la bande de sous-toiture comprend l'aiguilletage sur toute sa largeur.

2. Bande de sous-toiture selon la revendication 1, **caractérisée en ce que** les barres de treillis (3, 4) du treillis de renfort sont faits d'une gaze.

3. Bande de sous-toiture selon l'une des revendications précédentes, **caractérisé en ce que** la couche de non-tissé (1) comprend des fils/fibres (9) qui comprennent un coeur (12) entouré d'une gaine (13) laquelle est faite d'un matériau plastique qui fond à une température inférieure que le matériau plastique du coeur (12).

4. Bande de sous-toiture selon la revendication 3, **caractérisé en ce qu'**au moins cinq pour cent, préférentiellement quinze pour cent des fibres de la couche de non-tissé (5) est fait de fils/fibres (9) comprenant une gaine (13).

5. Bande de sous-toiture selon l'une des revendications précédentes, **caractérisé par** un revêtement (14) imperméable à l'eau, mais perméable à la vapeur d'eau.

6. Bande de sous-toiture selon la revendication 5, **caractérisé en ce que** le revêtement (14) est un revêtement de polyuréthane.

7. Bande de sous-toiture selon la revendication 5 ou 6, **caractérisé en ce que** le revêtement (14) est appliqué sur le côté de la couche de non-tissé (1) qui est à l'opposé du treillis de renfort (2).

8. Procédé de fabrication d'un bande de sous-toiture selon une ou plusieurs des revendications précédentes, dans lequel des rubans (3, 4) s'étendant parallèlement entre eux et se croisant, sont appliqués sur une couche de non-tissé (1) formée par un non-tissé, dans lequel subsistent entre les rubans des espaces libres de treillis dont la largeur est supérieure à un multiple d'une largeur de bande, dans lequel les rubans sont faits d'un tissu avec fils de chaînes et fils de trame croisant ceux-ci, dans lequel un aiguilletage est réalisé à l'aide d'aiguilles (8) sur toute la largeur du non-tissé lors duquel des parties de fils/fibres (9) de la couche de non-tissé (1) sont introduites dans les rubans (3, 4), dans lequel sont utilisés des barres d'aiguilles lesquelles sont équipées d'aiguilles sur toute leur longueur de manière à ce que les aiguilles piquent également dans les espaces libres de treillis dans la couche de non-tissé, dans lequel la structure de surface ainsi réalisée est, au moins du côté du non-tissé portant le treillis de renfort, traitée thermiquement sur une surface étendue dans la zone des barres de treillis (3, 4) et des espaces libres de treillis de manière à faire fondre la surface des parties de fils / fibres (9) de la couche de non-tissé qui ont été introduites dans les espaces intermédiaires de tissu des barres de treillis (3, 4).

9. Procédé selon la revendication 8, **caractérisé en ce que** l'aiguilletage est réalisé depuis le côté non-tissé, dans lequel les aiguilles (8) introduisent des sections de fils / fibres (9) de la couche de non-tissé (1) dans le tissu des rubans (3, 4).

10. Procédé selon l'une des revendications 8 ou 9, **caractérisé en ce que** la couche de non-tissé (1) comprend des fils / fibres (9) comprenant une gaine (13) qui fond à une température inférieure que le coeur (12) qui est entouré par la gaine (13).

11. Procédé selon l'une des revendications 8 à 10, **caractérisé en ce qu'**un revêtement monolithique perméable à la vapeur (14) est appliqué en particulier sur le côté de la couche de non-tissé qui est à l'opposé du treillis (2).

12. Procédé selon l'une des revendications 8 à 11, **caractérisé en ce que** des rouleaux de calandrage sont utilisés pour le traitement thermique entre lesquels passent la bande de sous-toiture.
